# EUROPEAN PATENT SPECIFICATION

(11) **EP 0 384 508 B1**
(45) Date of publication and mention of the grant of the patent: **04.05.1994**
(21) Application number: 90200261.7
(22) Date of filing: 06.02.1990
(51) Int. Cl.: A23D 9/00

(54) **Use of a fat composition in frying**
Verwendung einer Back- und Bratfettzusammensetzung
Utilisation d'une composition de matière grasse de friture

(30) Priority: 24.02.1989 EP 89200471; 26.06.1989 EP 89201705; 18.12.1989 EP 89203231
(43) Date of publication of application: 29.08.1990
(73) Proprietor: UNILEVER N.V., 3013 AL Rotterdam (NL); UNILEVER PLC, London EC4P 4BQ (GB)
(72) Inventor: Castenmiller, Wilhelmus Adrianus Maria, NL-3131 CH Vlaardingen (NL); Decio, R. Maurizio, NL-32284 AK Rijswijk (NL); Van Oosten, L. Cornelis Willem, NL-3137 CL Vlaardingen (NL)
(74) Representative: Mulder, Cornelis Willem Reinier, Dr.

(56) References cited:
- EP-A- 0 287 157
- EP-A- 0 291 106
- EP-A- 0 311 154
- EP-A- 0 350 987
- EP-A- 0 350 988

## Description

The present invention relates to the use of a fat composition in frying foodstuffs, and more particularly to the use in frying of a fat composition containing a substantial amount of non-digestible polyol fatty acid polyesters.

In the western world 30 to 50% of the energy intake is due to the consumption of fats and oils. Of this amount about 40% is consumed as 'visible' fat, such as butter, margarine, lard, shortening and edible oils. A considerable proportion of the 'visible' fats is introduced into the average diet by consumption of food products which are baked or fried in frying oils or fats, such as chips, crisps, battered and crumbed meat and fish products, and the like.

In view of the health hazards connected to obesity and unbalanced fat-intake there is a continuous interest in food products having a reduced caloric content. An attractive route to reduction of the caloric content in food products, such as in particular frying oils or fats and products fried therein, is replacement of conventional digestible fats and oils by non-digestible fat substitutes.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

Edible fat-containing products comprising indigestible polyol fatty acid polyesters are known in the art, and described in e.g. US 3,600,186, US 4,005,195, US 4,005,196, US 4,034,083 and EP 0 233 856, EP 0 236 288, EP 0 235 836, EP 0291 106 and EP 0 287 157.

EP 0 291 106 discloses edible compositions containing sucrose polyesters which have the ability to bind liquid oils. The ester groups of the sucrose polyesters are a combination of certain long chain and short chain saturated, straight chain fatty acid radicals. As the sucrose polyesters are solid at temperatures of 40°C and higher they can form plastic compositions containing a large proportion of oil, being solid at temperatures of 40°C and lower.

EP 0 287 157 describes the frying of foodstuffs in a frying medium comprising sugar polyester and other frying medium ingredients. The fatty acids for the sugar polyester can be saturated or unsaturated.

When fat compositions containing polyol fatty acid polyesters are used in frying, polymerization of the polyesters is observed. Such polymerization is undesirable as the polymers formed have undesired properties such as a relatively high viscosity.

We have found now that fat compositions comprising polyol fatty acid polyesters low in unsaturated fatty acid residues and having a relatively low slip melting point can advantageously be used in frying of

Here by frying of foodstuffs is meant the process of contacting a foodstuff with a fat composition having a temperature of at least 100°C. Thus the term frying includes, for instance, both deep and shallow frying. Generally, when used in frying foodstuffs according to the invention, the fat composition has a temperature in foodstuffs. Accordingly the present invention is concerned with the use of a fat composition comprising at least 60 wt.% fat in frying foodstuffs, wherein the fat essentially consists of a mixture of one or more non-digestible polyol fatty acid polyesters and optionally triglyceride fat, the mixture of polyol fatty acid polyesters containing less than 12% unsaturated fatty acid residues and having a slip melting point of 42°C and less. the range of 120-240°C. The slip melting point of a fat or fatty substance can be conveniently defined as the temperature at which the amount of solid phase in a melting fat or fatty substance has become so low that an air bubble is forced upwards in an open capillary filled with the fat or fatty substance.

The use of the above fat composition in frying foodstuffs offers the advantage, as compared with the use of polyol fatty acid polyester containing compositions known in the art, that only limited polymerization is observed and, due to the relatively low slip melting point, a better mouthfeel is obtained. Frying fat compositions containing polyol fatty acid polyesters having a slip melting point of above 45°C. tend to crystallize in the mouth and can crystallize prematurely on utensils etc.

Since in-mouth crystallization is an undesired phenomenon which is related to the slip melting point of the polyol fatty acid polyester, preferably the mixture of polyol fatty acid polyesters has a slip melting point in the range of 30-42°C.

Although we do not wish to be bound by theory, it is believed that the rate of polymerization observed under frying conditions is related to the amount of unsaturated fatty acid residues present in the polyol fatty acid polyesters. In the absence of substantial amounts of unsaturated fatty acid residues only limited polymerization is observed, even at temperatures close to 200°C. Accordingly in a preferred embodiment of the present invention the mixture of polyol fatty acid polyesters contains less than 8% unsaturated fatty acid residues, more preferably less than 5% unsaturated fatty acid residues. Most preferably the mixture of polyesters contains less than 3% unsaturated fatty acid residues.

We have found that polyol fatty acid polyesters comprising polyunsaturated fatty acid residues are particularly prone to polymerization. Accordingly in a preferred embodiment the mixture of polyol fatty acid polyester comprises less than 3 %, preferably even less than 1 % polyunsaturated fatty acid residues.

Polyol fatty acid polyesters exhibiting both a relatively low slip melting point and a low polymerization rate on frying, can be obtained by ensuring that the polyol fatty acid polyesters contain a limited amount of unsaturated fatty acid residues and in addition to that a substantial amount of short saturated fatty acid residues. Thus, preferably, in the use of the present fat composition, the mixture of polyol fatty acid polyesters contains at least 20% of fatty acid residues having a carbon chain length of less than 15. In an even more preferred embodiment the mixture of polyol fatty acid polyesters contains at least 35% of fatty acid residues having a carbon chain length of less than 15. Short fatty acid residues can suitably be derived from triglyceride sources such as lauric oils (e.g. palm kernel oil and coconut oil), butter oil and medium chain triglycerides. According to another preferred embodiment the mixture of polyol fatty acid polyesters contains at least 25% of fatty acid residues having a carbon chain length of 6-14, preferably at least 25% of fatty acid residues having a carbon chain length of 10-14.

We have found that frying fat compositions having very good frying properties can be obtained if said compositions contain from 20-80 wt.% of triglyceride fat having a slip melting point in the range of 10-35°C. Such frying fat compositions have frying properties very similar to frying fats consisting of pure triglyceride fat. Preferably the fat composition used in accordance with the present invention comprises less than 75% polyol fatty acid polyesters and at least 25% triglycerides. More preferably the fat composition comprises 40% to 70% by weight of polyol fatty acid polyesters and 60% to 30% by weight of triglyceride fats.

According to a preferred embodiment of the present invention the statistical variance in carbon chain length of the fatty acid residues of the polyol fatty acid polyesters is more than 4.0, preferably more than 5.0. Polyol fatty acid polyesters of the latter type crystallize relatively slowly and therefore offer the advantage that premature crystallization in the mouth or on utensils is frustrated.

When used in frying, the present composition should not contain much water as otherwise violent spattering will be observed. Generally the fat composition according to the invention should contain less than 10 wt.% of water, preferably less than 3 wt.% of water.

In this specification the term 'polyol' is intended to refer to any aliphatic or aromatic compound which comprises at least four free hydroxyl groups. Such polyols in particular include the group of sugar polyols, which comprises the sugars, i.e. the mono-, di-and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification by 'non-digestible' is meant that at least about 70% by weight of the material concerned is not digested by the human body.

In this specification, unless otherwise indicated, the term 'fat' refers to edible fats and oils consisting essentially of triglycerides, and which may be of animal, vegetable or synthetic origin. The terms fat and oil are used interchangeably.

In order to avoid anal leakage it is advantageous to employ polyol fatty acid polyesters having a slip melting point of above 35°C. Accordingly in a preferred embodiment of the invention, the mixture of polyol fatty acid polyesters used has a slip melting point of above 35°C. When using such a relatively high melting polyester, it can be beneficial to combine said polyester with a relatively low melting triglyceride fat. Preferably the triglyceride fat used has a slip melting point below 35°C. Particularly good products, i.e. products that show essentially no premature crystallization, exhibit no drip-off problems and have very good frying properties are frying fat compositions containing triglyceride fats having a slip melting point below 30°C.

For reasons of oxidative stability it is preferred that the triglyceride fat has a slip melting point of at least 10°C. More preferably the triglyceride fat has a slip melting point of at least 20°C. The combination of triglyceride fat having a slip melting point of at least 20°C with polyol fatty acid polyesters having a slip melting point of above 35°C enables the preparation of plastic frying fat compositions which can be packaged in wrappers.

Low melting triglyceride fat can be included in the fat composition, used in accordance with the invention, to improve the drip-off after frying. In general triglyceride fat is not included in an amount of over 75% by weight in order to benefit sufficiently from the calorie reduction obtained from the indigestible polyester. According a very preferred embodiment of the invention, a fat composition is used wherein the fat consists of 55% to 70% by weight of polyol fatty acid polyesters and 45% to 30% by weight of triglyceride fats. If very high levels of polyol fatty acid polyesters are employed, a layer of fat remains around the fried products after frying, which layer does hardly drip off. Also these fat layers impart a fatty mouthfeel to such fried products, which mouthfeel is significantly thicker than that of triglyceride fats and hence even more undesirable.

Suitable triglyceride oils and fats include, optionally modified by partial or complete hydrogenation and/or fractionation to provide the required melting characteristic, coconut oil, palm kernel oil, palm oil, butter fat, soybean oil, safflower oil, cotton seed oil, rape seed oil, poppy seed oil, corn oil sunflower oil, tallow, lard and mixtures thereof. Of these oils palm oil, partially hardened rape seed oil and partially hydrogenated soybean oil are preferred.

Polyol fatty acid polyesters have been defined in general chemical terms hereinbefore. Preferably, polyol fatty acid polyesters derived from sugars or sugar alcohols are applied, and in particular, sugar fatty acid polyesters derived from disaccharides, such as sucrose.

In general fatty acids per se or naturally occurring fats and oils may be used as a source for the fatty acid residues in the polyol fatty acid polyesters. If necessary, conventional techniques may be used to provide the required slip melting points. Suitably such techniques include full or partial hydrogenation, interesterification, transesterification and/or fractionation, and may be used before or after conversion of the polyols to polyol fatty acid polyesters. Suitable sources of the fatty acid residues are vegetable oils and fats, such as in particular partially or fully hydrogenated palm oils, palm kernel oils and soybean oils.

Polyol fatty acid polyesters are applied of which, on average, more than 70% of the polyol hydroxyl groups have been esterified with fatty acids. Preferably polyol fatty acid polyesters are used with higher degrees of conversion, in particular polyol fatty acid polyesters of which, on an average, more than 85% or even over 95% of the polyol hydroxyl groups have been esterified with fatty acids.

The frying fat composition used in accordance with the present invention may comprise in addition to the polyol fatty acid polyesters and the triglyceride fats minor ingredients conventionally found in frying oils, such as anti-spattering agents, colouring agents, flavours, emulsifiers, anti-oxidants etc. The present frying fat composition, for instance, can suitably contain emulsifiers such as mono- and di-glycerides and lecithin. Preferably emulsifier constitute less than 3 wt.% of the product. More preferably the present frying fat composition contains less than 2 wt.% of emulsifier.

According to a preferred embodiment the frying fat composition used in accordance with the present invention contains an effective amount of silicon oil, preferably it contains 0.1-50 ppm silicon oil. An example of a silicon oil which can suitably be utilized is PDMS (polydimethyl siloxane).

The invention is further illustrated by means of the following examples.

### EXAMPLES 1-8

The thermal stability of 8 different sucrose fatty acid polyesters was investigated. The precise composition of these sucrose polyesters (SPE's) is as follows:
- SPE1 :: fatty acid residues derived from soybean oil; hydroxyl value of 4.3; slip melting point of less than 5°C.
- SPE2 :: fatty acid residues derived from touch-hardened soybean oil having a slip melting point of 28°C; hydroxyl value of 2.1; slip melting point of less than 10°C.
- SPE3 :: fatty acid residues derived from palm olein obtained through wet fractionation (slip melting point 30°C); hydroxyl value of 4.2; slip melting point of less than 20°C.
- SPE4 :: fatty acid residues derived fully hardened palm kernel oil having a slip melting point of 39°C; hydroxyl value of 7.5; slip melting point of 24°C.
- SPE5 :: fatty acid residues derived from partially hardened soybean oil having a slip melting point of 36°C; hydroxyl value of 2.3; slip melting point of 19°C
- SPE6 :: fatty acid residues derived from 55% fully hardened soybean oil, slip melting point 65°C, and 45% touch-hardened soybean oil, slip melting point 28°C; hydroxyl value of 4.0; slip melting point of 42°C.
- SPE7 :: fatty acid residues derived from palm oil hardened to a slip melting point of 44°C; hydroxyl value of 2.9; slip melting point of 34°C.
- SPE8 :: fatty acid residues derived from 53% fully hardened palm kernel oil, slip melting point 39°C, and 47% fully hardened palm oil (slip melting point 58°C); hydroxyl value of 2.3; slip melting point of 38°C.

The initial polymer concentration in each of the above sucrose polyesters is at most 3.0 %. The statistical variance in carbon chain length of the fatty acid residues of SPE4 was well above 5. The statistical variance in carbon chain length of SPE8 was above 4.0 and for all other SPE's the variance was well below 4.0.

50 grams of each of the above sucrose polyesters were poured into a 100 ml glass beaker having a diameter of 44 mm. During a period of 24 hours the oil in the beaker was repeatedly heated to 180°C by means of an oil bath. The beaker was immersed in the oil bath, which bath was heated for 1 hour, after which the heater was switched off for 1 hour and the oil bath was allowed to cool down (at ambient temperature). This proceeding was repeated till 24 hours had lapsed.

The oil samples obtained after the above treatment were analyzed for their polymer content by means of GPC-HPLC. The odour of the samples was evaluated by an expert panel after said samples had been diluted with sunflower oil (1:5). The following results were thus obtained:

| Sample | % unsat. | wt.% polymer | Odour | Odour ranking |
|---|---|---|---|---|
| SPE1 | 86 | 33.7 | Fried fish, waxy | 1 |
| SPE2 | 77 | 22.4 | Slightly deviating | 6 |
| SPE3 | 69 | 10.1 | Strongly deviating | 2/3 |
| SPE4 | 1 | 6.6 | Deviating | 5 |
| SPE5 | 33 | 21.2 | Strongly deviating | 2/3 |
| SPE6 | 35 | 19.2 | Rather deviating | 4 |
| SPE7 | 48 | 18.5 | Reasonable | 7/8 |
| SPE8 | 2 | 2.9 | Acceptable | 7/8 |

As regards the odour ranking, a lower figure indicates a stronger off flavour.

Of the above samples SPE4 and SPE8 display a relatively low tendency to polymerize. As can be seen from the above table, SPE4 and SPE8 differ from the other samples in that they contain substantially less unsaturated fatty acid residues.

### Examples 9-12

Frying fat compositions comprising 60% sucrose polyesters and 40% touch hardened rape seed oil (slip melting point 26°C) were used to pre-fry and fry freshly cut French fries. The sucrose polyesters used in the respective frying fat compositions were:
- Frying fat A -: as SPE8, but hydroxyl value of 1.8 and slip melting point of 41°C;
1 % unsaturated fatty acid residues
- Frying fat B -: as SPE6, but hydroxyl value of 7.2 and slip melting point of 42°C
35 % unsaturated fatty acid residues
- Frying fat C -: SPE2
- Frying fat D -: fatty acid residues derived from 66% fully hardened soybean oil, slip melting point 65°C, and 34% touch-hardened soybean oil, slip melting point 28°C;
hydroxyl value of 5.9;
slip melting point of 48°C
27 % unsaturated fatty acid residues

In each of the above fat compositions 8 batches of 200 g of the French fries were subsequently prefried for 5 minutes at 150°C. After the fat compositions and fried French fries had been allowed to cool down, the pre-fried French fries were fried in the same frying fat compositions at 180°C for 4 minutes (in 6 subsequent batches). The amount of polymerized sucrose polyester (fraction having mol weight above 4000) present in the fat composition after these frying operations was determined by means of GPC-HPLC. The fat compositions used in the above procedure were used once more in exactly the same procedure after which again the polymerized sucrose polyester content was determined.

The following results were obtained:

| Fat Composition | initial polymer % | polymer % 1st session | polymer % 2nd session |
|---|---|---|---|
| A | 0.4 | 1.2 | 2.3 |
| B | 0.4 | 2.7 | 5.8 |
| C | 0.5 | 4.6 | 9.6 |
| D | 0.4 | 2.6 | 5.4 |

The above procedure was repeated using exactly the same fat compositions, yielding the following results (initial polymer content not measured again):

| Fat Composition | initial polymer % | polymer % 1st session | polymer % 2nd session |
|---|---|---|---|
| A | 0.4 | 0.8 | 2.0 |
| B | 0.4 | 2.1 | 4.6 |
| C | 0.5 | 4.1 | 8.8 |
| D | 0.4 | 2.2 | 4.3 |

The fat present in French fries obtained after pre-frying and frying in the fat compositions during the last second session, was extracted and the amount of polymerized sucrose polyester was again determined by means of GPC-HPLC. The following results were thus obtained:

| Frying fat | polymer content after pre-frying | polymer content after frying |
|---|---|---|
| A | 0.8 wt.% | 1.2 wt.% |
| B | 2.6 wt.% | 3.6 wt.% |
| C | 4.0 wt.% | 6.1 wt.% |
| D | 2.2 wt.% | 3.4 wt.% |

The above frying experiment was repeated for frying fat A. The polymer levels measured in the fat extracted from the French fries after pre-frying and frying were 1.1% and 1.3% respectively.

### Examples 13 and 14

To frying fat compositions A and B of the previous example 4 ppm silicon oil (PDMS) were added. Again 2 litres of each fat composition were used to pre-fry 10 batches of 200 g of freshly cut French fries and to subsequently fry 7 batches of the pre-fried French fries so obtained. This procedure was repeated on three subsequent days, while each time again using the fat composition of the previous day. The concentration level of polymerized sucrose polyester (MW>4000) in the fat compositions after 1, 2, 3 and 4 days was measured by means of GPC-HPLC:

| Fat composition | day 1 | day 2 | day 3 | day 4 |
|---|---|---|---|---|
| A | 0.5 | 0.6 | 0.6 | 0.8 |
| B | 0.6 | 1.1 | 1.5 | 1.9 |

In comparison with the polymerization rates observed for the corresponding frying fat compositions in Examples 9-12, the polymerization rates cited in the above table are substantially lower. Thus it can be concluded that the presence of an effective amount of silicon oil retards the polymerization process substantially.

## Claims

1. Use of a fat composition comprising at least 60 wt.% fat in frying foodstuffs, wherein the fat essentially consists of a mixture of one or more non-digestible polyol fatty acid polyesters and optionally triglyceride fat, the mixture of polyol fatty acid polyesters containing less than 12% unsaturated fatty acid residues and having a slip melting point of 42°C and less.

2. Use according to claim 1, wherein the mixture of polyol fatty acid polyesters has a slip melting point in the range of 30-42°C.

3. Use according to claim 1 or 2, wherein the mixture of polyol fatty acid polyesters contains less than 8% unsaturated fatty acid residues, preferably less than 5% unsaturated fatty acid residues.

4. Use according to any one of claims 1-3, wherein the mixture of polyol fatty acid polyesters contains at least 20%, preferably at least 35% of fatty acid residues having a carbon chain length of less than 15.

5. Use according to any one of claims 1-4, wherein the triglyceride fat has a slip melting point below 35, preferably below 30°C.

6. Use according to any one of claims 1-5, wherein the mixture of polyol fatty acid polyesters contains at least 25% of fatty acid residues having a carbon chain length of 10-14.

## Patentansprüche

1. Verwendung einer mindestens 60 Gew.-% Fett umfassenden Fettzusammensetzung beim Braten von Nahrungsmitteln, wobei das Fett im Wesentlichen aus einer Mischung eines oder mehrerer unverdaulicher Polyolfettsäurepolyester und fakultativ Triglyceridfett besteht, die Mischung der Polyolfettsäurepolyester weniger als 12 % ungesättigte Fettsäurereste enthält und einen Steigschmelzpunkt von 42°C und darunter hat.

2. Verwendung nach Anspruch 1, wobei die Mischung der Polyolfettsäurepolyester einen Steigschmelzpunkt im Bereich von 30 bis 42°C hat.

3. Verwendung nach Anspruch 1 oder 2, wobei die Mischung der Polyolfettsäurepolyester weniger als 8 % ungesättigte Fettsäurereste, vorzugsweise weniger als 5 % ungesättigte Fettsäurereste, enthält.

4. Verwendung nach irgendeinem der Ansprüche 1 bis 3, wobei die Mischung der Polyolfettsäurepolyester mindestens 20 %, vorzugsweise mindestens 35 %, Fettsäurereste einer Kohlenstoffkettenlänge von weniger als 15 enthält.

5. Verwendung nach irgendeinem der Ansprüche 1 bis 4, wobei das Triglyceridfett einen Steigschmelzpunkt unterhalb von 35°C, vorzugsweise unterhalb von 30°C, hat.

6. Verwendung nach irgendeinem der Ansprüche 1 bis 5, wobei die Mischung der Polyolfettsäurepolyester mindestens 25 % Fettsäurereste einer Kohlenstoffkettenlänge von 10 bis 14 enthält.

## Revendications

1. Utilisation d'une composition grasse comprenant au moins 60% en poids de graisse dans des aliments en cours de friture dans laquelle la graisse consiste essentiellement en un mélange d'un ou plusieurs polyesters d'acides gras de polyols non digérables et, facultativement une graisse de triglycérides, le mélange de polyesters d'acides gras de polyols contenant moins de 12% de restes d'acides gras insaturés et présentant un point de fusion de glissement de 42°C et plus bas.

2. Utilisation selon la revendication 1, dans laquelle le mélange de polyesters d'acides gras de polyols présente un point de fusion de glissement de 30 à 42°C.

3. Utilisation selon la revendication 1 ou 2, dans laquelle le mélange de polyesters d'acides gras de polyols contient moins de 8% de restes d'acides gras insaturés et, de préférence, moins de 5% de restes d'acides gras insaturés.

4. Utilisation selon l'une quelconque des revendications 1 à 3, dans laquelle le mélange de polyesters d'acides gras de polyols contient au moins 20% et, de préférence, 35% de restes d'acides gras ayant une longueur de chaîne de carbone de moins de 15.

5. Utilisation selon l'une quelconque des revendications 1 à 4, dans laquelle la graisse de triglycérides présente un point de fusion de glissement au dessous de 35 et, de préférence, au dessous de 30°C.

6. Utilisation selon l'une quelconque des revendications 1 à 5, dans laquelle le mélange de polyesters d'acides gras de polyols contient au moins 25% de restes d'acides gras de 10 à 14 atomes de carbone.
